# EUROPÄISCHE PATENTSCHRIFT

(11) **EP 1 361 180 B1**
(45) Veröffentlichungstag und Bekanntmachung des Hinweises auf die Patenterteilung: **13.08.2008**
(21) Anmeldenummer: 03010213.1
(22) Anmeldetag: 06.05.2003
(51) Int. Cl.: B65G 7/12, B65D 85/68

(54) **Vorrichtung für den Transport von Haushaltsgeräten**
Device for handling household appliances
Dispositif pour le transport des appareils ménagers

(30) Priorität: 06.05.2002 ES 200201122
(43) Veröffentlichungstag der Anmeldung: 12.11.2003
(73) Patentinhaber: BSH Bosch und Siemens Hausgeräte GmbH, 81739 München (DE)
(72) Erfinder: Gracia Bobed, Ismael, 50194 Zaragoza (ES)
(74) Vertreter: Richter, Harald

(56) Entgegenhaltungen:
- DE-U- 1 786 387
- DE-U- 9 201 608
- DE-U- 29 910 571
- US-A- 4 116 481
- US-A- 5 944 370

## Beschreibung

### AUFGABE DER ERFINDUNG

Die vorliegende Erfindung betrifft gemäß der Darlegung in dieser Beschreibung eine Vorrichtung für den Transport von Haushaltgeräten, im Einzelnen vorgesehen für die Beförderung oder den Transport von Haushaltgeräten mit großen Abmessungen, wie Herden, Waschmaschinen, Geschirrspülern, Kühlschränken und Ähnliches, wobei eine Beförderung vom Zustellfahrzeug bis zur Wohnung des Empfängers enthalten sein kann.

Es ist eine Aufgabe der Erfindung, eine Vorrichtung zu schaffen, die es ermöglicht, die Beförderung jeder Art der oben genannten Haushaltgeräte bequem und einfach vorzunehmen, und zwar in jenen Fällen; in denen es erforderlich ist, die Beförderung von Hand vorzunehmen, da vor Ort kein Gabelstapler, Aufzug oder ähnliches Mittel zur Verfügung steht, das die mechanische Beförderung ermöglichen würde.

### STAND DER TECHNIK

Die Beförderung oder der Transport von Haushaltgeräten wie Herden, Waschmaschinen oder Ähnlichem muss gelegentlich von Hand oder mit "Muskelkraft" erfolgen, entweder weil keine mechanischen Mittel vorhanden sind, die die Beförderung des Gerätes ermöglichen, oder weil die Merkmale des Ortes den Einsatz von geeigneten mechanischen Mitteln nicht zulassen und in diesen Fällen muss die Beförderung von Hand erfolgen.

Wie es offensichtlich ist, führen manuelle Transportmaßnahmen von schweren und umfangreichen Apparaten, wie es die oben Genannten sind, häufig zu Stößen und Abschürfungen, die der Empfänger verständlicherweise nicht zulässt, so dass es erforderlich ist, den Apparat an den Hersteller oder Verkäufer zurückzusenden, mit den entsprechenden für diesen anfallenden Kosten.

Zieh- und Tragegurte für im Wesentlichen quaderförmige, schwere Transportgüter sind im Stand der Technik bereits bekannt. So offenbart US 5,944,370 einen Zuggurt mit einer Befestigungsschnalle zum Festzurren und Schlaufen, die so beabstandet an dem Gurt angebracht sind, dass sie jeweils gerade an zwei Kanten des Transportgutes liegen. Eine erfindungsgemäße Transportvorrichtung ist nicht offenbart. Auch DE 9201608 U1 offenbart einen festzurrbaren Gurt mit mittig angenähten Schlaufen zum Befördern einer Waschmaschine. US 4,116,481 betrifft ein aus Papier und Faserverstärkungen gefertigtes Band, welches zu einer Schlinge an den Enden zusammengenäht wird. Nachteilig ist an einer derartigen Schlingenkonstruktion, dass Griffe lediglich durch Schlaufen geformt sind und demnach keine schweren Gegenstände transportiert werden können, da derartige Schlaufen zu unbequem zu handhaben sind.

### BESCHREIBUNG DER ERFINDUNG

Die Vorrichtung der Erfindung wurde geschaffen, um die oben genannten Nachteile zu beheben, wobei es ermöglicht wird, die Beförderung oder den Transport von Haushaltgeräten mit großem Volumen und Gewicht einfach vorzunehmen, ohne dass es notwendig ist, den Apparat auszupacken, so dass damit die Gefahren von Stößen und Abschürfungen, die dann logischerweise nur noch die entsprechende Verpackung betreffen, an den Geräten selbst vermieden werden.

In diesem Sinn besteht die Vorrichtung der Erfindung im Wesentlichen aus einem Band mit flexibler Beschaffenheit und

ausreichender Widerstandsfähigkeit, das ohne Bruchgefahr das Gewicht des Apparats tragen kann, wobei die Länge des Bandes größer ist als die entsprechende Abmessung der Breite oder Tiefe des Apparats, der befördert werden soll. Dieses Band ist an seinen Enden mit jeweils einem Haltegriff versehen, der es zulässt, dass zwei Arbeiter den Apparat leicht befördern können, nachdem sie diesen zuvor auf dem Band oder den Bändern aufrecht abgestellt haben, wobei die Bänder in die Gruppe aus Apparat und Verpackung integriert sein oder zum Zeitpunkt der Durchführung der Beförderung angeordnet werden können.

Dieses Problem versucht man allerdings gegenwärtig mit der Integration von Griffen zu lösen, die am Rahmen des Apparats selbst angeordnet sind, so dass über diese Griffe natürlich die Beförderung desselben erleichtert wird. Um aber diese Griffe ergreifen zu können, muss der Apparat ausgepackt werden, der dann wieder der Gefahr von Stößen und Abschürfungen ausgesetzt ist, da die Beförderung immer noch von Hand erfolgt, und all dies unabhängig davon, dass sich die Ästhetik des Apparates durch den Einbau dieser Griffe und ihrem entsprechenden Rahmen verändert.

In jedem Fall besitzt das flexible Band eine rutschhemmende Oberfläche, die seine gesamte Länge umfassen kann oder zumindest eine Länge entsprechend der Abmessung der Breite oder Tiefe des zu befördernden Haushaltgerätes.

Die Beschaffenheit des flexiblen Bandes ist aus widerstandsfähigem Material, wie oben bereits gesagt, wobei dieses mit Textilien als Kordeln oder mit Plastik verstärkt sein kann. Im zuletzt genannten Fall kann das Band mittels eines Stanz- oder Spritzverfahrens hergestellt sein.

In Bezug auf die rutschhemmende Oberfläche des Bandes, kann diese ein Bestandteil desselben sein und im gleichen Spritzverfahren zusammen mit dem Band in Form von Wellenschultern oder Querrippen oder jeder anderen Konfiguration, die die rutschhemmende Oberfläche bestimmt, hergestellt werden. Alternativ kann diese rutschhemmende Oberfläche durch Streifen mit haftenden Eigenschaften an beiden Seiten ausgeführt sein, mit einer Schutzfolie oder dergleichen, die abgenommen wird, bevor der Apparat auf dem Beförderungsband abgesetzt wird.

Auf jeden Fall ist das besagte Band von geringem Gewicht, wiederverwendbar und kann bei Verpackungen mit oder ohne Folie verwendet werden.

Wie oben schon erwähnt, kann das Band, dass die Beförderungs- oder Transportvorrichtung darstellt, in die Verpackung selbst integriert sein. Daher muss der Spediteur, dem das Vorhandensein der Vorrichtung bekannt ist, nicht erst zumindest einen Teil der Verpackung entfernen, wodurch die Gefahr von Stößen und Abschürfungen heraufbeschworen würde, sondern er kann den Apparat zusammen mit der Verpackung von Hand bis zur Wohnung des Empfängers transportieren.

Es besteht auch die Möglichkeit, dass die Vorrichtung in einer auffälligen Farbe ausgeführt ist, damit der Spediteur das Vorhandensein derselben in der Verpackung erkennt oder überprüft.

Die Vorrichtung kann auch eine Gruppe darstellen, die in die Verpackung selbst integriert ist, wobei die Gruppe aus zwei flexiblen Bändern besteht, die durch eine Querplatte verbunden sind, die zum Zeitpunkt der Durchführung der Beförderung oder des Transportes des Apparats verwendet wird.

Um die im Nachstehenden angegebene Beschreibung zu ergänzen und als Unterstützung für ein besseres Verständnis der Merkmale der Erfindung ist der vorliegenden Beschreibung ein Satz Zeichnungen beigefügt, anhand derer die Neuerungen und Vorteile der Vorrichtung für die Beförderung von Haushaltgeräten, ausgeführt gemäß der Erfindung, leichter verständlich sind.

### KURZE BESCHREIBUNG DER ZEICHNUNGEN

In der Zeichnung zeigen
- Fig. 1: eine perspektivische Ansicht eines Haushaltgerätes, konkret einer Waschmaschine, mit der entsprechenden Verpackung und der erfindungsgemäßen Vorrichtung zur Beförderung,
- Fig. 2: ein Detail eines Querschnitts des unteren Teils des in Fig. 1 dargestellten Haushaltgeräts, wobei der Querschnitt auf der Ebene eines der Bänder gemäß der vorliegenden Erfindung vorgenommen ist,
- Fig. 3: eine perspektivische Ansicht eines Haushaltgerätes mit Verpackung und einer Umhüllungsfolie, wobei das Band, das die erfindungsgemäße Vorrichtung zur Beförderung im unteren Bereich in der Benutzungssituation darstellt, sowie im oberen Bereich in Strichlinien die Anordnung des Bandes auf der Verpackung vor seiner Benutzung,
- Fig. 4: eine perspektivische Ansicht eines erfindungsgemäßen Bandes mit einer haftenden Oberfläche als rutschhemmendes Mittel, wobei diese Fläche mit einer abnehmbaren Folie geschützt ist,
- Fig. 5: eine perspektivische Ansicht eines Haushaltgerätes entsprechender Verpackung dem daran angebrachten, erfindungsgemäßen flexiblen Band als Vorrichtung zur Beförderung,
- Fig. 6: eine perspektivische Ansicht einer fortlaufenden Rolle von flexiblen Bändern mit den jeweiligen Griffen und verstärkt mit Längskordeln,
- Fig. 7: eine perspektivische Ansicht eines flexiblen Bandes aus Spritzplastik, wobei die Reliefs, die die rutschhemmende Oberfläche bilden, und die anatomische Konfiguration der Griffe zu sehen sind und
- Fig. 8: eine perspektivische Ansicht einer Gruppe, die die erfindungsgemäße Vorrichtung zur Beförderung enthält, die im unteren Teil des Apparats integriert ist, der befördert werden soll, und deren Vorrichtung aus zwei Bändern mit angeformten Griffen besteht, die parallel angeordnet und mit einem Querstreifen verbunden sind.

### BESCHREIBUNG DER BEVORZUGTEN AUSFÜHRUNGSFORM

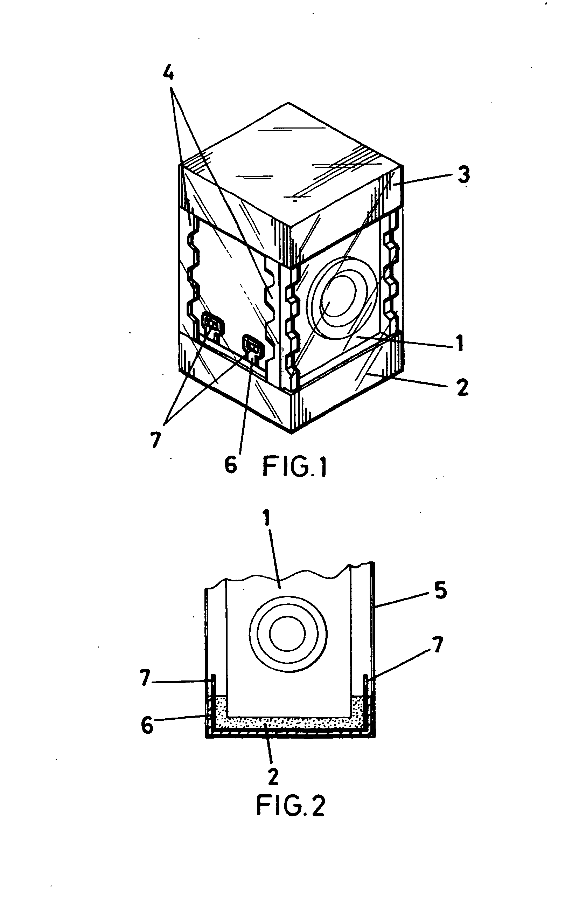

Angesichts der kommentierten Figuren kann man erkennen, wie die Vorrichtung der Erfindung als Mittel zur Beförderung bzw. zum Transport einer Art von Haushaltgeräten 1 mit beachtlichem Volumen und Gewicht, wie zum Beispiel einer Waschmaschine, eines Kühlschrankes, eines Geschirrspülers usw. bereitgestellt ist. Alle diese Geräte weisen eine paralepipede Konfiguration auf und sind für ihren Vertrieb durch eine Verpackung geschützt, die, wie in Fig. 1 dargestellt, aus einer Unterlage 2, einem Deckel 3 und Winkelstücken 4 in Übereinstimmung mit den Ecken oder Kanten des zu befördernden Apparats 1 bestehen kann, wobei diese Verpackung durch eine entfernbare Folie 5 ergänzt sein kann, die die gesamte Gruppe überzieht und im Allgemeinen als Folie bezeichnet wird.

Die erfindungsgemäße Vorrichtung ermöglicht die Beförderung des Apparats 1 in seiner aufrechten Position und von Hand, das heißt ohne Hilfe von Maschinen oder Fahrzeugen, wie einem Gabelstapler, bis zur Wohnung des Empfängers. Sie ist durch ein Band 6 von flexibler Beschaffenheit gebildet, dessen Länge größer sein muss als die entsprechende Abmessung der Breite oder Tiefe des Apparats 1, wobei das Band 6 an seinen Enden mit jeweils einem Griff 7 abgeschlossen ist, das das ergreifen von Hand ermöglicht, um den Apparat 1 zu befördern, wenn dieser auf das Band 6 aufgelegt wird.

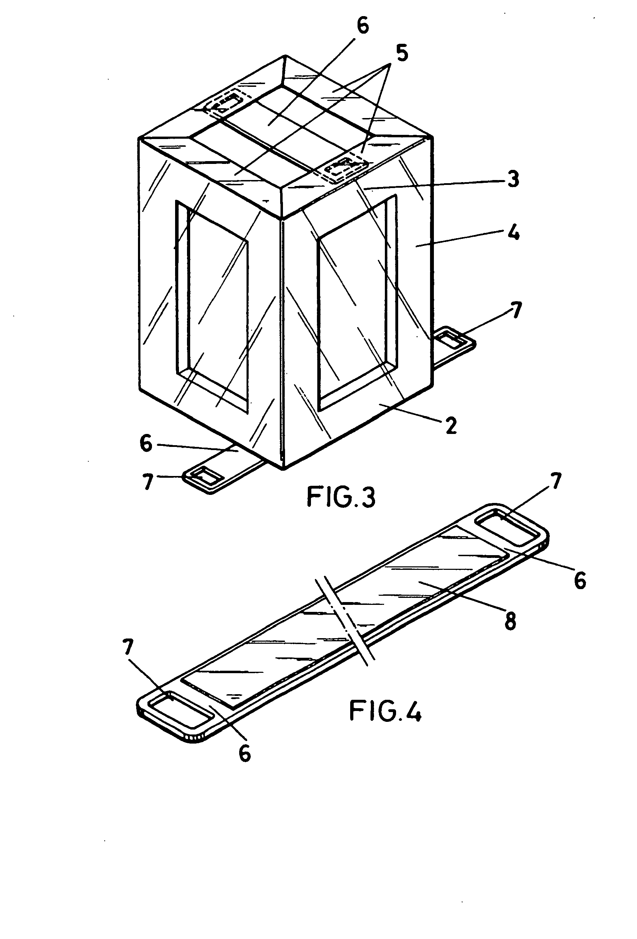

Wie bereits oben gesagt, kann die Beschaffenheit des Bandes 6 unterschiedlich sein, das heißt, es kann aus verschiedenen Materialien bestehen, muss aber auf jeden Fall eine rutschhemmende Oberfläche umfassen, um zu verhindern, dass das Gerät 1, wenn es darauf angeordnet ist, zur einen oder anderen Seite verrutschen kann. In Fig. 4 ist das Band 6 aus gestanztem Plastikmaterial zu sehen, umfassend einen haftenden Streifen, um das Verrutschen zu verhindern, wobei der Streifen mit einer Folie 8 geschützt ist, die entfernt wird, sobald das Band für die Beförderung oder den Transport des Apparats 1 eingesetzt wird.

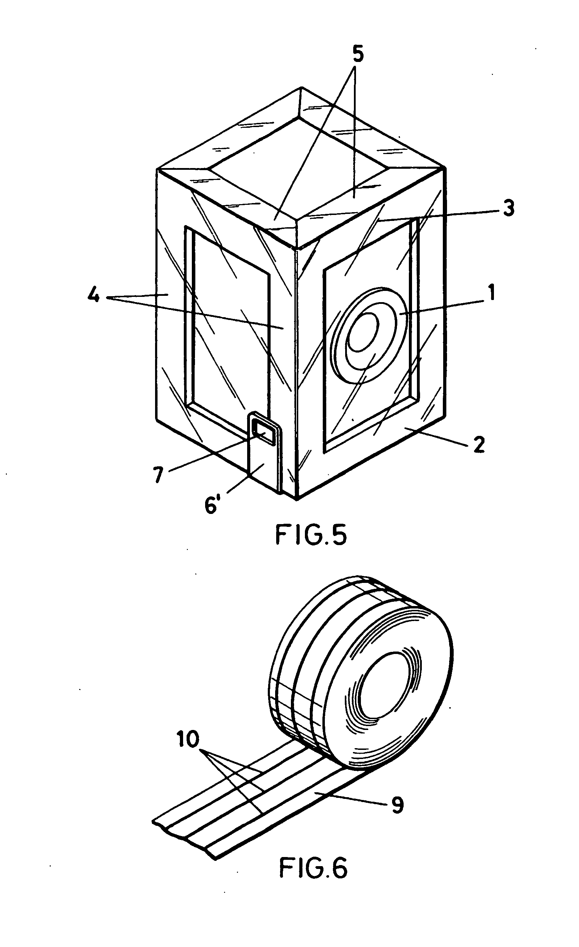

In einer Ausführungsform, die in Fig. 5 und 6 gezeigt ist, besteht die Vorrichtung aus einem Band 6' mit seinen entsprechenden Griffen 7, wobei das Band ausgehend von einer fortlaufenden Rolle oder Spule 9 mit flexibler und haftender Beschaffenheit und verstärkt mit Längskordeln 10, die ihm die ausreichende Widerstandsfähigkeit verleihen, um das Gewicht des Apparats 1 zu tragen, bereitgestellt wird.

Auf jeden Fall besteht die Möglichkeit, dass das erfindungsgemäße Band fest in die Verpackung selbst des zu befördernden Apparats integriert ist oder einen unabhängigen Teil derselben darstellt oder damit verbunden ist und zum Zeitpunkt der Durchführung der Beförderung oder des Transports abgenommen werden kann.

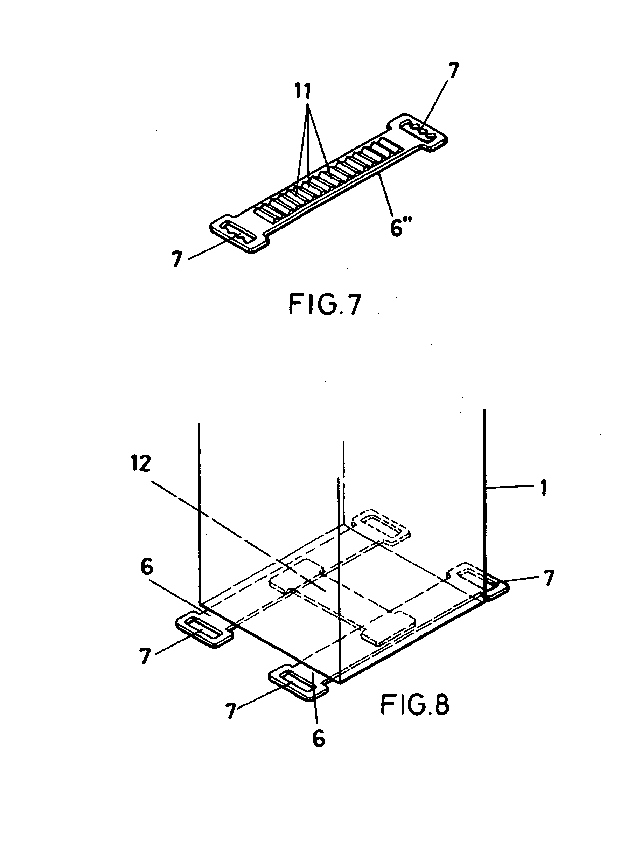

In einer Ausführungsform, die in Fig. 7 dargestellt ist, besteht die Vorrichtung aus einem Band 6" aus Plastik, hergestellt mit einem Spritzverfahren, dessen Oberfläche aus Reliefs 11 besteht, die während des Spritzverfahrens des Bandes selbst hergestellt wird, und das an seinen Enden die entsprechenden Griffe 7 aufweist, in diesem Fall mit einer anatomischen Konfiguration für die Anpassung der Finger.

In einer anderen Ausführungsform besteht die Vorrichtung aus einer Gruppe, die zwei Bänder 6 oder 6' oder 6 " mit ihren entsprechenden Griffen 7 umfasst, verbunden mittels eines Querstreifens 12, wie in Fig. 8 bereits an einen Apparat 1 angewendet dargestellt, so dass in diesem Fall die Bänder 6 oder 6' oder 6" und der Verbindungsstreifen 12 Elemente sind, die auf einer Halterung angebracht sind, von der sie abgelöst werden können, um ordnungsgemäß angebracht zu werden, damit darauf der Apparat 1 angeordnet werden kann, wie in Fig. 8 gezeigt, um seine Beförderung von Hand zu ermöglichen.

Wie zu sehen war, ist eines der vorteilhaften Merkmale der Vorrichtung, dass sie einfach in die Verpackung selbst des Apparats 1 integriert werden kann, so dass der Spediteur, dem diese in der Verpackung integrierte Vorrichtung bekannt ist, die Verpackung nicht entfernen muss, denn die Beförderung oder der Transport bis zur Wohnung des Empfängers kann mittels der besagten Vorrichtung erfolgen, wobei die Gefahr von Stößen und Kratzern bei der Beförderung minimiert wird.

## Patentansprüche

1. Vorrichtung zur Beförderung von Haushaltgeräten, insbesondere für die Beförderung oder den Transport von großen Haushaltgeräten wie Waschmaschinen, Geschirrspülern, Herden, Kühlschränken oder Ähnliches, die zumindest ein Band (6 oder 6' oder 6") mit flexibler Beschaffenheit umfasst, ausgestattet an seinen Enden mit jeweils einem Griff (7) zum Ergreifen des entsprechenden Apparats (1), aufgestellt auf dem entsprechenden Band oder Bändern, mit den Händen; wobei die Länge des Bandes oder der Bänder größer ist als die entsprechende Abmessung der Breite oder Tiefe des zu befördernden Apparats (1) selbst, **dadurch gekennzeichnet dass** das Band (6, 6' oder 6") von flexibler Beschaffenheit eine rutschhemmende Oberfläche besitzt, auf der der Apparat (1) ruht, wobei vorgesehen ist, dass die Ausdehnung der rutschhemmenden Fläche die gesamte oder einen Teil der Länge des Bandes selbst umfasst.

2. Vorrichtung nach Anspruch 1, **gekennzeichnet dadurch, dass** das Band (6') von flexibler Beschaffenheit mit seinen jeweiligen Griffen (7) einen haftenden Streifen (9) umfasst, ausgestattet mit Längskordeln (10) zur Verstärkung.

3. Vorrichtung nach Anspruch 1 oder 2, **gekennzeichnet dadurch, dass** das Band (6) von flexibler Beschaffenheit durch Stanzen aus Plastik hergestellt wird.

4. Vorrichtung nach Anspruch 1 oder 2, **gekennzeichnet dadurch, dass** das Band (6") von flexibler Beschaffenheit mit seinen entsprechenden Griffen (7) durch Spritzen aus Plastik hergestellt wird.

5. Vorrichtung nach einem der Ansprüche 1 bis 4, **gekennzeichnet dadurch, dass** die rutschhemmende Oberfläche des Bandes (6 oder 6') ein haftender Streifen mit einer abnehmbaren Folie (8) ist.

6. Vorrichtung nach einem der Ansprüche 1 bis 4, **gekennzeichnet dadurch, dass** die rutschhemmende Oberfläche des Bandes (6") durch eine Reihe von Rippen oder Wellenschultem (11) ausgebildet ist, die in einem Teil oder der gesamten Ausdehnung des Bandes (6") selbst vorgesehen sind.

7. Vorrichtung nach einem der vorstehenden Ansprüche, **gekennzeichnet dadurch, dass** sie zwei flexible Bänder (6 oder 6' oder 6") mit entsprechenden Griffen (7) umfasst, die parallel zueinander angeordnet sind und durch einen Querstreifen (12) verbunden sind, so dass sie eine Gruppe bilden, auf der der Apparat (1) für seine Beförderung angeordnet wird.

8. Vorrichtung nach einem der vorstehenden Ansprüche, **gekennzeichnet dadurch, dass** das Band oder die Bänder (6 oder 6' oder 6") mit flexibler Beschaffenheit in die Verpackung (2-3-4-) des Apparats (1) aufgenommen werden können.

9. Vorrichtung nach einem der vorstehenden Ansprüche, **gekennzeichnet dadurch, dass** als Option Mittel zur visuellen Identifizierung des Bandes oder der Bänder (6 oder 6' oder 6") innerhalb der Verpackung des Apparats (1) vorgesehen sind.

## Claims

1. Device for transporting domestic appliances, particularly for transport or conveyance of large domestic appliances such as washing machines, dishwashers, ovens, refrigerators or similar, which comprises at least one band (6 or 6' or 6") with flexible property equipped at each of its ends with a respective grip (7) for gripping the corresponding appliance (1), which is placed on the corresponding band or bands, by hands, wherein the length of the band or the bands is greater than the corresponding dimension of the width or depth of the appliance (1) itself to be transported, **characterised in that** the band (6, 6' or 6") of flexible property has a slip-inhibiting surface on which the appliance (1) rests, wherein it is provided that the extent of the slip-inhibiting surface embraces the entire length or a part of the length of the band itself.

2. Device according to claim 1, **characterised in that** the band (6') of flexible property together with its respective grips (7) comprises an adhesive strip (9) equipped with longitudinal knurling (10) for reinforcing.

3. Device according to claim 1 or 2, **characterised in that** the band (6) of flexible property is produced by punching from plastic.

4. Device according to claim 1 or 2, **characterised in that** the band (6") of flexible property with its corresponding grips (7) is produced by injection-moulding from plastic.

5. Device according to any one of claims 1 to 4, **characterised in that** the slip-inhibiting surface of the band (6 or 6') is an adhesive strip with a removable film (8).

6. Device according to any one of claims 1 to 4, **characterised in that** the slip-inhibiting surface of the band (6") is formed by a row of ribs or corrugation shoulders (11) which are provided in a part or the entire extent of the band (6") itself.

7. Device according to any one of the preceding claims, **characterised in that** it comprises two flexible bands (6 or 6' or 6") with corresponding grips (7), which are arranged parallel to one another and connected by a transverse strip (12) so that they form a group on which the appliance (1) is arranged for transport thereof.

8. Device according to any one of the preceding claims, **characterised in that** the band or the bands (6 or 6' or 6") with flexible property can be incorporated in the packaging (2-3-4) of the appliance (1).

9. Device according to any one of the preceding claims, **characterised in that** means are provided for visual identification of the band or of the bands (6 or 6' or 6") within the packaging of the appliance (1) as an option.

## Revendications

1. Dispositif d'acheminement d'appareils ménagers, notamment pour l'acheminement ou le transport de gros appareils ménagers, tels des machines à laver, des lave-vaisselle, des cuisinières, des réfrigérateurs ou similaires, comprenant au moins une bande (6 ou 6' ou 6") de nature flexible pourvue à chaque fois, à ses extrémités, d'une poignée (7) permettant de saisir manuellement l'appareil (1) correspondant posé sur la bande ou les bandes correspondante(s), la longueur de la bande ou des bandes étant supérieure à la dimension correspondante de la largeur ou de la profondeur de l'appareil (1) à acheminer lui-même, **caractérisé en ce que** la bande (6, 6' ou 6") de nature flexible possède une surface anti-dérapante sur laquelle repose l'appareil (1), l'étendue de la surface anti-dérapante étant prévue pour comprendre la totalité ou une partie de la longueur de la bande elle-même.

2. Dispositif selon la revendication 1, **caractérisé en ce que** la bande (6') de nature flexible pourvue de ses poignées respectives (7) comprend une bande adhérente (9), pourvue de cordons longitudinaux (10) pour le renforcement.

3. Dispositif selon la revendication 1 ou 2, **caractérisé en ce que** la bande (6) de nature flexible est fabriquée en plastique par découpage-poinçonnage.

4. Dispositif selon la revendication 1 ou 2, **caractérisé en ce que** la bande (6") de nature flexible pourvue de ses poignées (7) correspondantes est fabriquée en plastique par injection.

5. Dispositif selon l'une des revendications 1 à 4, **caractérisé en ce que** la surface anti-dérapante de la bande (6 ou 6') est une bande adhérente avec une feuille amovible (8).

6. Dispositif selon l'une des revendications 1 à 4, **caractérisé en ce que** la surface anti-dérapante de la bande (6") est formée par une série de nervures ou épaulements ondulés (11) prévus dans une partie ou dans la totalité de l'étendue de la bande (6") elle-même.

7. Dispositif selon l'une des revendications précédentes, **caractérisé en ce qu'**il comprend deux bandes flexibles (6 ou 6' ou 6") pourvues de poignées (7) correspondantes qui sont disposées parallèlement l'une à l'autre et reliées par une bande transversale (12) de manière à former un groupe sur lequel l'appareil (1) est placé pour son acheminement.

8. Dispositif selon l'une des revendications précédentes, **caractérisé en ce que** la bande ou les bandes (6 ou 6' ou 6") de nature flexible peut/peuvent être reçue/s dans l'emballage (2-3-4) de l'appareil (1).

9. Dispositif selon l'une des revendications précédentes, **caractérisé en ce que** des moyens d'identification visuelle de la bande ou des bandes (6 ou 6' ou 6") sont prévus, optionnellement, à l'intérieur de l'emballage de l'appareil (1).
